## Europäisches Patentamt

## European Patent Office

## Office européen des brevets

(19)

(11) Numéro de publication: **0 216 695**
**B1**

(12) **FASCICULE DE BREVET EUROPEEN**

(45) Date de publication du fascicule du brevet:
**29.11.89**

(21) Numéro de dépôt: **86401988.0**

(22) Date de dépôt: **11.09.86**

(51) Int. Cl.⁴: **B29C 67/14,** D04H 3/07,
B29C 53/80

(54) Procédé et machine pour la fabrication de pièces creuses de revolution formées de fils s'étendant selon trois directions différentes.

(30) Priorité: **18.09.85 FR 8513823**

(43) Date de publication de la demande:
**01.04.87 Bulletin 87/14**

(45) Mention de la délivrance du brevet:
**29.11.89 Bulletin 89/48**

(84) Etats contractants désignés:
**BE CH DE GB LI**

(56) Documents cités:
EP-A- 0 039 264
EP-A- 0 044 760
EP-A- 0 187 068
FR-A- 2 315 562
FR-A- 2 408 676
FR-A- 2 509 706

(73) Titulaire: **COMMISSARIAT A L'ENERGIE ATOMIQUE,
31/33, rue de la Fédération, F-75015 Paris(FR)**
Titulaire: **J. BROCHIER ET FILS (Société Anonyme dite),
33, avenue Franklin Roosevelt,
F-69150 Decines-Charpieu(FR)**

(72) Inventeur: **Ephere, Jean-François, Domaine des
Fougères, F-33600 Pessac(FR)**
Inventeur: **Durand, Serge, 14, Route de Fourc,
F-33610 Cestas(FR)**
Inventeur: **Bompard, Bruno, 23, rue Montbriand,
F-69003 Lyon(FR)**
Inventeur: **Bruyere, Alain, 33, rue Jean Moulin,
F-38290 Villefontaine(FR)**

(74) Mandataire: **Mongrédien, André et al, c/o
BREVATOME 25, rue de Ponthieu, F-75008 Paris(FR)**

## Description

La présente invention se rapporte à une machine pour la fabrication de pièces creuses de révolution formées de fils s'étendant selon trois directions différentes.

Les directions des fils constituant la pièce de révolution sont les directions sensiblement radiale, axiale et circonférentielle, qui peuvent dans certains cas être sensiblement différentes des directions géométriques correspondantes.

La fabrication de telles pièces tissées tridimensionnelles peut se faire avec des fils de toute nature et notamment des fils de verre, de carbone, de graphite, de céramique, etc... Dans cet esprit, le mot fil désigne indifféremment des fibres, des mèches, des brins, des fils tressés, etc...

Dans l'état actuel de la technique, il est connu d'implanter des joncs radialement sur un mandrin support en un matériau permettant cette implantation, de façon à définir entre les joncs des couloirs longitudinaux et circonférentiels, puis de disposer dans ces couloirs, par bobinage et par tramage, des nappes de fils superposées et enfin d'éliminer le mandrin support. Un tel procédé est connu notamment du brevet français no 2 408 676 déposé le 23 septembre 1977 par le Commissariat à l'Energie Atomique.

Un perfectionnement à ce procédé a été proposé dans le brevet français no 2 509 706 déposé le 16 juillet 1981 par le Commissariat à l'Energie Atomique. Ce perfectionnement est relatif à l'implantation des joncs et permet, grâce à une perforation préalable du mandrin, d'implanter de façon satisfaisante des joncs de plus grandes dimensions.

En dépit des avantages présentés par ces procédés et par les machines qui en assurent la mise en oeuvre, certains problèmes se présentent en particulier lorsqu'on désire accroître de façon importante les dimensions des pièces à réaliser et en modifier les formes.

En premier lieu, les machines assurant habituellement le bobinage et le tramage des fils dans les couloirs formés entre les joues comprennent généralement un chariot de tramage qui se déplace en permanence parallèlement à l'axe du mandrin. Lors de l'usinage de pièces non cylindriques telles que des pièces de forme conique, tronconique ou complexes, le déroulement du fil de trame à la sortie de la passette de tramage s'effectue donc dans des conditions différentes selon que la passette se déplace dans l'un ou l'autre sens, puisque la passette est orientée perpendiculairement au chariot de tramage. De plus, dans le cas d'une pièce non cylindrique de grandes dimensions, cela peut conduire à ne pas déposer le fil de trame entre les picots mais au-delà de ceux-ci, sur une partie de la longueur de la pièce.

En second lieu, les procédés connus actuellement mettent en oeuvre successivement plusieurs machines différentes. Ainsi, on utilise successivement une machine servant à usiner le mandrin support, une machine servant à implanter les joncs sur ce mandrin et une machine assurant le bobinage et le tramage des fils dans les couloirs formés entre les joncs. En plus des inconvénients évidents liés au nombre des machines utilisées (coût, entretien, personnel, etc...), il faut noter que l'augmentation des dimensions des pièces conduit, à tolérances égales, à rendre très délicat l'asservissement de chacune des machines pour tenir compte de l'opération effectuée par la précédente. En particulier, on comprendra aisément que l'ajustement des pas du bobinage et du tramage en fonction du pas d'implantation des joncs est d'autant plus difficile à réaliser que les dimensions de la pièce augmentent.

Par ailleurs, le document FR-A 2 315 562 décrit un procédé de fabrication de pièces creuses de révolution, dans lequel on dispose tout d'abord des nappes de fils superposées, par bobinage et par tramage, sur un mandrin creux présentant au moins une fente s'étendant sur toute sa longueur. On coud ensuite l'empilement au travers de cette fente. Lorsqu'on réalise des pièces coniques, le mandrin porte des tiges radiales servant à accrocher les fils de trame qui ne s'étendent pas sur toute la longueur du mandrin. Les chariots de bobinage et de tramage sont alors montés sur des colonnes de guidage dont la position est réglable, afin que les déplacement de ces chariots soient parallèles à la génératrice de la pièce.

Enfin, il faut noter qu'on ne connaît pas à l'heure actuelle de machine permettant de fabriquer des pièces creuses de révolution pouvant atteindre 1500 mm de long et dont le diamètre externe peut varier entre 60 et 2100 mm.

La présente invention a précisément pour objet une machine pour la fabrication de pièces creuses de révolution permettant de réaliser des pièces de cette dimension et de formes diverses avec une bonne précision et cela pour une seule machine, ce qui permet de supprimer tout problème d'asservissement lié aux tolérances. En outre, cette machine peut remplir des fonctions supplémentaires telles que le contrôle des pièces en cours de fabrication.

Conformément à l'invention, il est donc proposé une machine pour la fabrication de pièces creuses de révolution formées de fils s'étendant selon trois directions dites radiale, axiale et circonférentielle, cette machine comprenant un châssis, une poupée fixe montée à une extrémité du châssis, une broche supportée de façon tournante par la poupée fixe, des moyens pour commander la rotation de ladite broche, une contre-pointe montée à l'autre extrémité du châssis, en face de la broche et définissant avec celle-ci un axe commun sensiblement horizontal, des moyens pour déplacer la contre-pointe selon ledit axe, un support mobile, apte à recevoir successivement plusieurs sous-ensembles de travail interchangeables comprenant un sous-ensemble d'implantation de joncs et un sous-ensemble de bobinage, monté d'un côté du châssis par rapport audit axe, des premiers moyens pour déplacer ce support parallèlement audit axe à une vitesse proportionnelle à la vitesse de rotation de ladite broche, des deuxièmes moyens pour commander un déplacement rapide du support parallèlement audit axe, des moyens pour déplacer le support perpendiculairement audit axe, afin de suivre une première patronne présentant le profil de la pièce à fabriquer, un ensemble de tramage monté de l'autre côté du châssis par rapport audit axe comportant un guide-chariot supportant de façon mobile un chariot de tramge et des moyens pour déplacer selon un mouvement de va et vient le chariot le long du guide-chariot, le chariot de tramage supportant une passette de tramage perpendiculairement par rapport audit guide-chariot afin de suivre une deuxième patronne, le guide-chariot étant monté sur le châssis par l'intermédiaire de moyens d'orientation réglables, cette machine étant caractérisée par le fait qu'elle comprend des moyens pour déplacer la contre-pointe selon ledit axe, que le support mobile est apte à recevoir successivement plusieurs sous-ensembles de travail interchangeables comprenant un sous-ensemble d'implantation de joncs et un sous-ensemble de bobinage, monté d'un côté du châssis par rapport audit axe, qu'elle comprend des deuxièmes moyens pour commander un déplacement rapide du support parallèlement audit axe, que l'ensemble de tramage est monté de l'autre côté du châssis par rapport audit axe et que la passette de tramage est montée sur le chariot de tramage par l'intermédiaire de moyens pour déplacer cette passette perpendiculairement par rapport au guide-chariot.

Le déplacement du chariot de tramage peut ainsi s'effectuer au plus près de la pièce, le guide-chariot étant orienté parallèlement à la génératrice moyenne de la pièce. Il est donc possible de réduire le porte-à-faux du chariot de tramage et de réaliser un dévidement satisfaisant du fil de trame dans l'un et l'autre sens de déplacement du chariot de tramage quel que soit le profil de la pièce à réaliser.

A cet effet, l'extrémité du guide-chariot adjacente à la poupée fixe est, de préférence, articulée sur un chariot apte à être déplacé perpendiculairement à l'axe de la machine par des moyens de réglage appropriès, l'extrémité opposée du guide-chariot de tramage étant montée sur une glissière fixée au châssis. De préférence, le sous-ensemble de bobinage comprend une partie interchangeable apte à être remplacée par un sous-ensemble d'usinage du mandrin et un sous-ensembel de contrôle dimensionnel est associé en permanence au sous-ensemble de bobinage, ce qui permet d'effectuer un tel contrôle à la fois lors de l'usinage du mandrin et lors du bobinage.

Selon un autre aspect de l'invention, le sous-ensemble de bobinage comprend une plaque plane orientée perpendiculairement audit axe et pénétrant dans un couloir circonférentiel de bobinage formé entre les joncs, en avant du fil de bobinage compte tenu du sens de rotation de la pièce. De préférence, des moyens sont alors prévus pour inverser l'orientation de ladite plaque selon le sens de rotation de la pièce.

Selon encore un autre aspect de l'invention, une poutre solidaire de la poutre de tramage et parallèle à celle-ci supporte deux dispositifs accrochetrame placés au niveau des extrémités de ladite pièce pour maintenir les extrémités des fils de trame déposés par la passette de tramage, au fur et à mesure de leur dépôt.

On décrira maintenant, à titre d'exemple non limitatif, un mode de réalisation préféré de l'invention en se référant aux dessins annexés dans lesquels:

–la figure 1 est une vue de face d'une machine selon l'invention destinée à la fabrication de pièces creuses de révolution de grandes dimensions, prise du côté du chariot de tramage,

– la figure 2 est une vue en bout de la machine de la figure 1,

- les figures 3a, 3b, 3c et 3d sont des vues de côté représentant de façon schématique le sous-ensemble d'usinage du mandrin, le sous-ensemble d'implantation des picots, le sous-ensemble de bobinage et le sous-ensemble de contrôle qui sont mis en place successivement ou simultanément sur un support mobile prévu à cet effet sur la machine,

- les figures 4, 5 et 6 sont des vues à plus grande échelle et en coupe partielle représentant respectivement en vue de dessus, de côté et en bout le sous-ensemble d'implantation des joncs,

- les figures 7 et 8 sont des vues de côté et de face représentant schématiquement le sous-ensemble de bobinage et l'implantation du sous-ensemble de contrôle par rapport à celui-ci,

- la figure 9 est une vue de côté en coupe partielle du sous-ensemble de contrôle,

- la figure 10 est une vue de face représentant à plus grande échelle le montage du chariot de tramage sur la poutre de tramage,

- la figure 11 est une vue de dessus de l'ensemble de tramage représenté sur la figure 10, et

- la figure 12 est une vue en coupe selon la ligne X-X de la figure 10.

Conformément aux caractéristiques principales de l'invention énoncées précédemment, la machine selon l'invention permet de réaliser toutes les opérations suivantes :

- usinage du mandrin support,
- implantation de joncs radialement dans le mandrin avec perforation préalable de celui-ci,
- bobinage et tramage de couches superposées constituant la pièce, et
- contrôle géométrique pouvant être effectué à la fois après l'usinage du mandrin support et à différents niveaux au cours du bobinage et du tramage de la pièce.

Afin de réaliser ces différentes fonctions, on verra au cours de la description qui va suivre que la machine selon l'invention a été conçue de telle sorte que l'usinage du mandrin, l'implantation des joncs, le bobinage et le contrôle sont réalisés par des sous-ensembles adaptés prévus pour être montés à tour de rôle ou, pour certains d'entre eux, simultanément sur un support mobile placé d'un côté de la machine par rapport à l'axe géométrique de celle-ci qui correspond à l'axe de la pièce à usiner, alors que le tramage est réalisé du côté opposé. Cette disposition permet de libérer l'accès de la machine par le haut favorisant la mise en place du mandrin avant son usinage et surtout l'enlèvement de la pièce terminée, par exemple au moyen d'un appareil de levage.

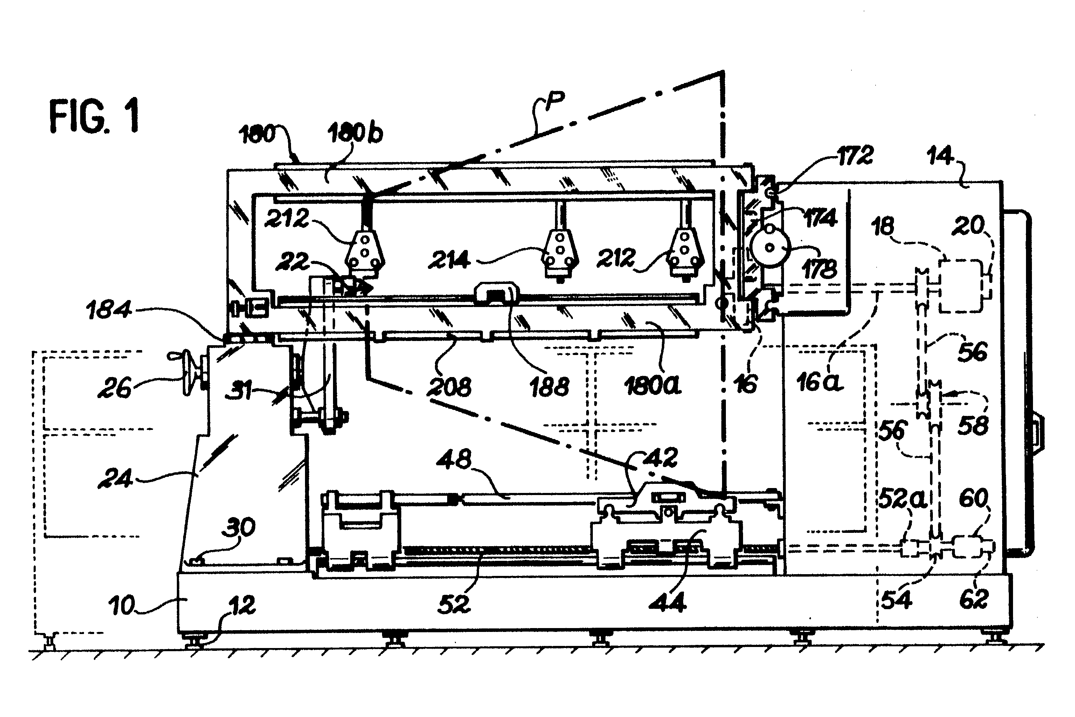

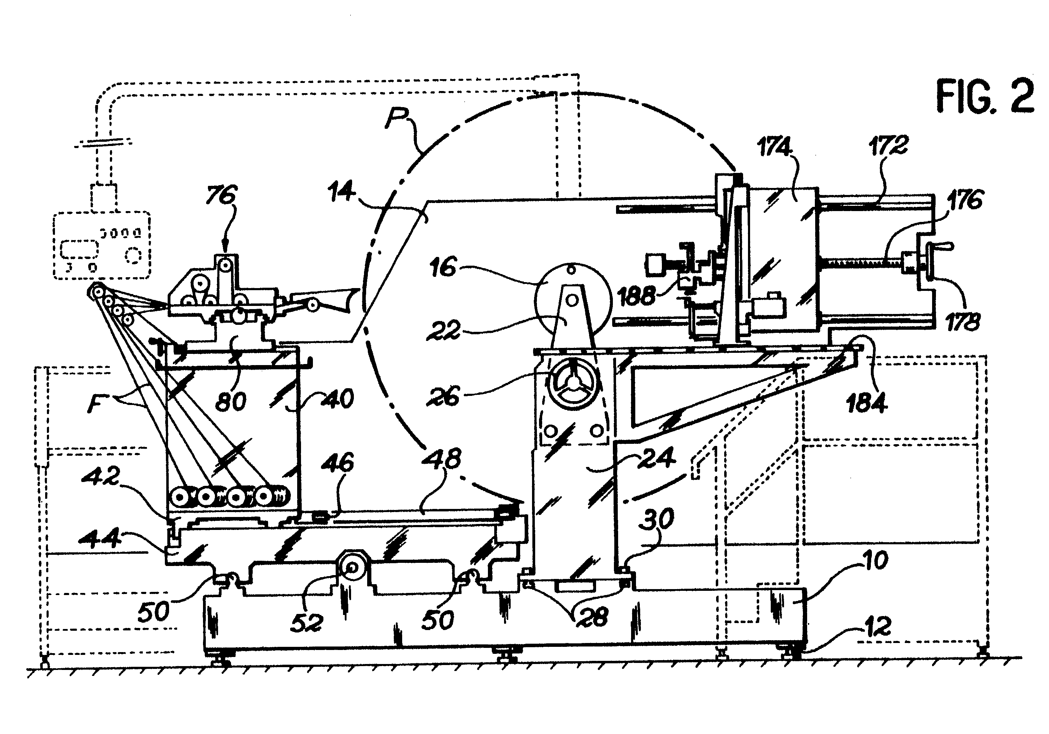

Si l'on se reporte aux figures 1 et 2, on voit que la machine selon l'invention comprend un châssis 10 reposant sur le sol par l'intermédiaire d'un certain nombre de vérins 12 assurant sa mise à niveau. A son extrémité droite sur la figure 1, le châssis 10 supporte une poupée fixe 14 sur laquelle est montée de façon tournante une broche 16 d'axe horizontal. La rotation de la broche 16 est commandée par un servo-moteur réducteur 18 auquel est associé un codeur optique 20. Le servo-moteur 18 est équipé d'un frein pouvant servir à effectuer un arrêt d'urgence.

A son extrémité opposée, le châssis 10 supporte une contre-pointe 22 située en face de la broche 16 et dont l'axe horizontal commun avec celui de cette dernière définit l'axe de la machine.

Dans la suite de la description, on désignera par X la direction définie par cet axe et par Y la direction horizontale perpendiculaire à cet axe.

La contre-pointe 22 est montée sur une console 24 de façon à pouvoir être déplacée sur une certaine distance parallèlement à l'axe de la machine en agissant sur un volant 26. On assure ainsi le montage et le démontage du mandrin et de la pièce qu'il supporte, représentés schématiquement par des traits mixtes en P sur les figures 1 et 2.

En outre, la console 24 peut elle-même se déplacer parallèlement à l'axe de la machine sur des glissières 28 (figure 2) afin de permettre le position-nement en fonction de la longueur du mandrin et de la pièce à réaliser. Lorsque ce réglage est effectué, la console 24 est immobilisée par rapport au châssis 10 par le serrage de boulons 30. Il est à noter que le déplacement de la console 24 le long des glissières 28 est commandé de préférence par un moto-réducteur (non représenté) associé à une crémaillère.

La contre-pointe 22 est montée sur la console 24 par l'intermédiaire d'une pièce intermédiaire 31, de telle sorte que la contre-pointe se trouve au-dessus de l'extrémité supérieure de la console. Cette disposition permet d'amener la patronne de tramage en position de travail.

De préférence, le mandrin supportant la pièce est lui-même monté sur un arbre support (non représenté). Cet arbre support est conçu de façon à pouvoir supporter une pièce lourde et à éviter tout glissement.

Comme l'illustre notamment la figure 2, le châssis 10 supporte également, sur le côté gauche de la machine par rapport au plan vertical passant par l'axe de celle-ci, un support mobile 40 apte à recevoir différents sous-ensembles d'usinage.

De façon plus précise, ce support mobile 40 est fixé sur une première table de guidage à billes 42, elle-même montée sur une deuxième table de guidage à billes 44, de façon à pouvoir se déplacer perpendiculairement au plan vertical passant par l'axe de la machine selon la direction Y. Ce déplacement a pour objet de permettre au support mobile 40 et au sous-ensemble d'usinage qu'il supporte de suivre le profil des pièces à fabriquer lorsqu'il se déplace parallèlement à l'axe de la machine.

En pratique, ce déplacement est assuré par un vérin pneumatique (non représenté) qui est interposé entre les tables 42 et 44 afin de maintenir en permanence un galet 46 solidaire de la table 42 en appui contre une came ou patronne de bobinage 48 assujettie à la table 44. La came 48 est interchangeable et elle est faite selon le profil de la pièce à tisser. Ainsi, les sous-ensembles d'usinage montés sur le support mobile 40 suivent automatiquement le profil de la pièce à réaliser lorsque ce support se déplace parallèlement à l'axe de la machine.

Afin de permettre ce déplacement du support mobile 40 parallèlement à l'axe de la machine, selon la direction X, la table inférieure 44 est montée sur le châssis 10 par l'intermédiaire de glissières 50 parallèles à cet axe, la commande du déplacement de la table étant réalisée au moyen d'une vis à billes 52 également parallèle à l'axe X. En pratique, le pas de la vis 52 peut être par exemple de 6 mm. L'entraînement en rotation de la vis à bille 52 a pour effet de déplacer la table 44, le support mobile 40 et les sous-ensembles d'usinage qu'ils supportent parallèlement à l'axe X de la machine.

Selon la fonction à remplir, cette commande en rotation de la vis à billes 52 peut être réalisée par deux moyens différents. En effet, la vitesse de déplacement de la table 44 doit être relativement lente en cours d'usinage. C'est-à-dire aussi bien lors de l'usinage du mandrin que lors de l'implantation des joncs et du bobinage, alors qu'il est souhaitable de pouvoir effectuer un déplacement rapide par exemple lors du contrôle et lorsque chaque opération est terminée. De plus, la nécessité d'effectuer les opérations telles que l'implantation des joncs et le bobinage avec un pas constant et contrôlé requiert que les déplacements lents de la table 44 lors de l'usinage soient commandés en même temps que la rotation du mandrin et de la pièce, alors que les déplacements rapides doivent au contraire pouvoir être effectués indépendamment de la rotation du mandrin et même lorsque celui-ci ne tourne pas.

Compte tenu de ces impératifs de fonctionnement, on voit de façon schématique sur la figure 1 que l'axe 52a de la vis à bille 52 supporte une poulie débrayable 54 reliée à l'arbre d'entraînement en rotaton 16a de la broche 16 par deux courroies crantées 56 et une poulie intermédiaire interchangeable 58. Le remplacement de la poulie intermédiaire 58 permet de modifier facilement le pas axial des pièces à tisser. Ainsi, si le pas de la vis à billes est de 6 mm, on peut notamment donner au pas de tissage des valeurs telles que 2,5 mm, 3 mm, 4 mm ou 5 mm.

La rotation rapide de la vis à billes 52 est commandée quant à elle par un moteur à courant continu 60 agissant directement sur l'axe 52a de la vis. Un codeur optique 62 associé au moteur 60 permet de connaître la position du support 40 selon l'axe X.

Comme l'illustrent très schématiquement les figures 3a à 3d, différents sous-ensembles peuvent être montés successivement sur le support mobile 40 selon l'étape de la fabrication de la pièce à laquelle on se situe.

Ainsi, la figure 3a représente le sous-ensemble 44 d'usinage du mandrin qui comprend principalement un outil 66 tel qu'une meule montée à l'extrémité d'un bras 68 et dont l'entraînement en rotation est commandé par un moteur 70. Le bras 68 est fixé sur un support 72 dont seule la silhouette est représentée sur la figure 3a. En pratique ce support 72 est constitué par le sous-ensemble de bobinage sur lequel le sous-ensemble d'usinage 64 est monté à la place d'un porte-roulette, comme on le verra ultérieurement. Le support 72 est lui-même fixé de façon interchangeable sur une table horizontale 80 mobile selon la direction Y sur le support 40.

De préférence, le sous-ensemble d'usinage 64 comprend de plus une centrale d'aspiration (non représentée) placée à côté de la meule 66 et venant récupérer toutes les poussières d'usinage.

Il est à noter que l'utilisation d'une meule comme outil d'usinage du mandrin se justifie par le fait que l'avance du support mobile 40 commandée par la rotation de la vis 52 s'effectue selon un pas relativement grand correspondant au pas d'implantation des joncs et de bobinage des fils circonférentiels.

En pratique, il est à noter que l'implantation d'un poste d'usinage du mandrin sur la machine selon l'invention est particulièrement utile pour la fabrication de pièces de grande dimension pour lesquelles l'usinage du mandrin ne pourrait se faire que sur des machines spéciales.

Parallèlement, on remarquera que la fabrication de mandrins de grand diamètre (pouvant atteindre 2 m ou plus) pose un certain nombre de problèmes pratiques résultant notamment des dimensions des blocs de mousse disponibles sur le marché qui sont sensiblement inférieures au diamètre souhaité.

A cet effet, il est proposé selon un aspect secondaire de l'invention de coller ces blocs parallè lépipédiques sur les faces d'un bloc métallique de section carrée, afin de réaliser une pièce présentant un noyau central métallique et une structure externe faite de mousse. C'est alors cette pièce, dont la section externe est carrée, qui est usinée à l'aide du sous-ensemble 64 pour former le mandrin.

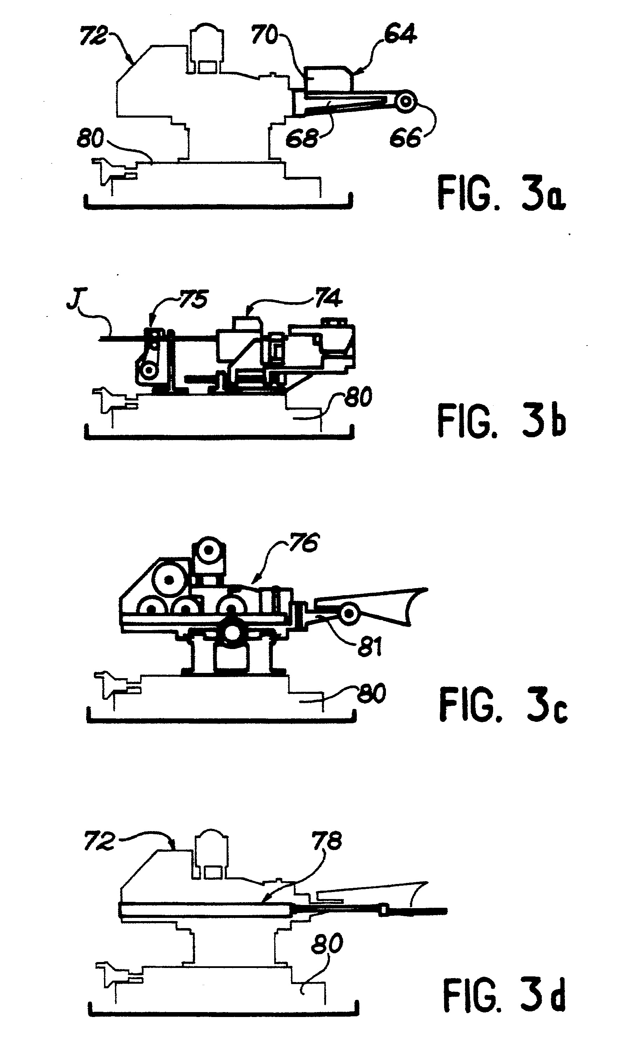

Lorsque l'usinage du mandrin est terminé, le support 72 portant le sous-ensemble d'usinage 64 est démonté et remplacé par le sous-ensemble d'implantation des joncs sur le mandrin ainsi usiné, ce poste étant désigné par la référence générale 74 sur la figure 3b. Il sera décrit en détail par la suite. A ce sous-ensemble 74 est associé un embrayage 75 alimentant pas à pas le sous-ensemble 74 avec un jonc continu horizontal J.

Lorsque l'implantation des joncs est terminée, le sous-ensemble 74 est à son tour démonté et remplacé par le sous-ensemble 76 de bobinage des fils circonférentiels entre les joncs préalablement implantés sur le mandrin comme l'illustre la figure 3c. Ce sous-ensemble 76 sera également décrit plus en détail ultérieurement. Il est mis en oeuvre alternativement avec l'ensemble de tramage dont la description sera également faite par la suite.

La figure 3d représente également de façon schématique le sous-ensemble 78 de contrôle dimensionnel qui sera également décrit plus en détail ultérieurement. Ce sous-ensemble 78 est associé en permanence avec le support 72 dont le contour est également représenté sur la figure 3d. Etant donné que ce support 72 est constitué par le sous-ensemble de bobinage 76 auquel on a retiré le porte-roulette 81 (figure 3c), le sous-ensemble 78 est donc en place en permanence aussi bien lors de l'usinage du mandrin à l'aide du sous-ensemble 64 que lors du bobinage des fils circonférentiels à l'aide du sous-ensemble 76. Des contrôles di mensionnels du mandrin après usinage et de la pièce en cours de fabrication peuvent ainsi être effectués selon un programme préétabli.

Chacun des sous-ensembles 64, 74, 76 et 78 est conçu de telle sorte qu'il agit sur le mandrin ou sur la pièce pratiquement au niveau de l'axe de la machine. Dans tous les cas, un réglage précis du positionnement du sous-ensemble selon la direction Y peut être réalisé à l'aide de la table 80 portée par le support mobile 40 et sur laquelle viennent se fixer les sous-ensembles.

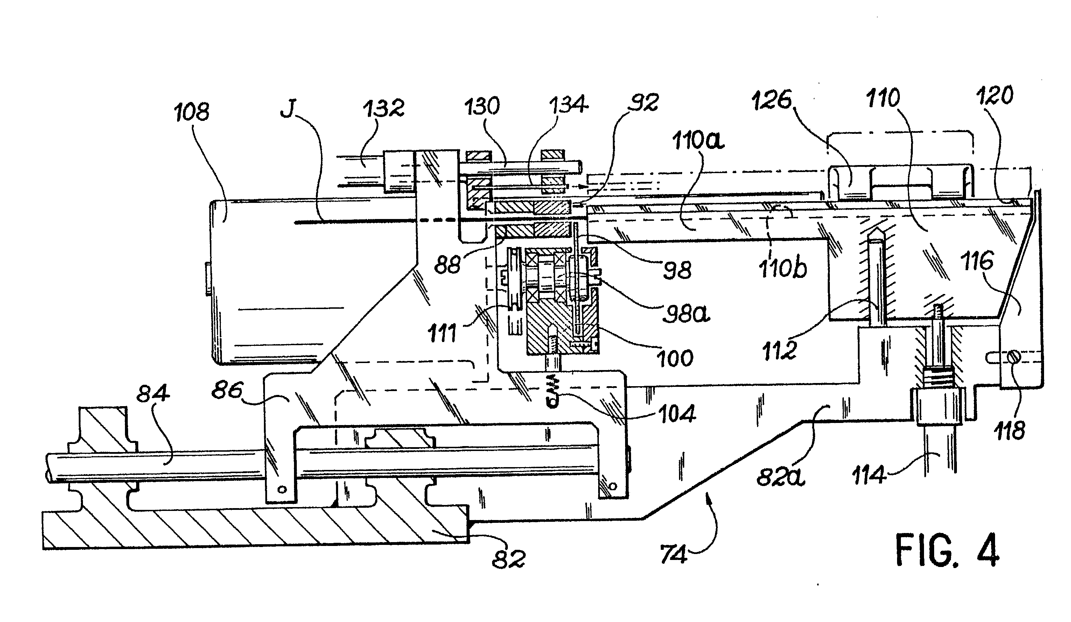

Une description détaillée du sous-ensemble 74 d'implantation des joncs dans la mousse constituant au moins la partie externe du mandrin va maintenant être faite en se référant aux figures 4 à 6.

Le sous-ensemble d'implantation de joncs 74 comporte tout d'abord un bâti 82 apte à être monté sur la table 80. Ce bâti 82 supporte de façon coulissante selon la direction Y définie précédemment, c'est-à-dire selon une direction horizontale perpendiculaire à l'axe de la machine, par l'intermédiaire de deux colonnes 84, une platine 86. Le réglage de la position de la platine 86 sur les colonnes 84 permet de faire varier la longueur des joncs implantés.

La platine 86 présente un trou horizontal 88 dans lequel est introduit le jonc J non tronçonné. L'introduction du jonc J dans le trou 88 est effectuée pas à pas à partir d'une bobine à l'aide du système d'alimentation 75 (figure 3b).

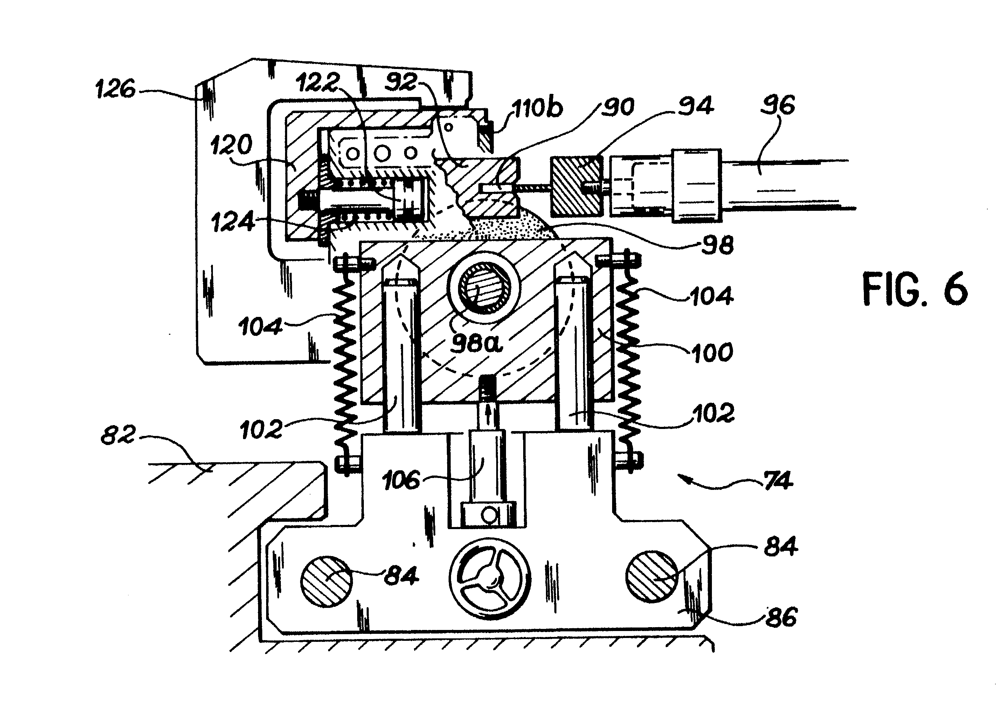

Comme l'illustre notamment la figure 6, le trou 88 est prolongé par une fente 90 formée dans un mors femelle 92 solidaire de la platine 86. Un mors mâle mobile 94 est monté dans la platine 86 de façon à pouvoir se déplacer perpendiculairement au jonc J, c'est-à-dire dans le cas de la figure 6 selon la direction X, sous l'action d'un vérin 96. Les mors 92 et 94 forment ainsi une pince permettant de maintenir l'extrémité du jonc non coupé lors de la découpe d'un segment de celui-ci.

A cet effet, les mors 92 et 94 de la pince sont placés légèrement en retrait par rapport à une meule diamantée 98 en forme de disque disposée perpendiculairement au jonc J. L'axe horizontal 98a de la meule 98 est monté de façon tournante dans un support de meule 100 supporté par la platine 86. Afin de permettre le déplacement de la meule 98 selon une direction. perpendiculaire à celle du jonc J, le support 100 est monté de façon coulissante sur la platine 86 par l'intermédiaire de colonnes de guidage 102. Des ressorts de traction 104 sont accrochés sur le support 100 et sur la platine 86 afin de ramener la meule 98 dans une position telle que celle-ci ne soit pas située dans le prolongement du trou 88 et de la fente 90. Cette position d'attente est représentée sur les figures 4 et 6.

Le déplacement de la meule à l'encontre de l'action des ressorts 104 afin de commander la coupe du jonc J est réalisé au moyen d'un vérin 106 interposé entre la platine 86 et le support 100.

La rotation de la meule 98 est commandée quant à elle par un moteur 108 monté sur la platine 86 et entraînant en rotation l'axe 98a de la meule par l'intermédiaire d'un système de poulies et de courroie 111 placé sensiblement perpendiculairement à la direction de déplacement du support 100, afin que la courroie reste constamment en appui sur les poulies.

Sur la figure 4, on voit que le bâti 82 comporte un prolongement 82a qui s'étend en direction du mandrin. Ce prolongement 82a supporte à son extrémité une tête d'implantation 110 dont un prolongement 110a s'étend vers l'arrière par rapport au mandrin jusqu'à proximité de la meule 98, afin d'assurer le guidage du jonc J à l'intérieur d'une rainure 110b. La tête d'implantation 110 est montée à l'extrémité du prolongement 82a de façon à pouvoir se déplacer alternativement vers le haut ou vers le bas perpendiculairement au trajet horizontal du jonc J. A cet effet, la tête 110 est montée de façon coulissante sur des colonnes 112 solidaires du prolongement 82a du bâti. La commande du déplacement de la tête 110 le long des colonnes 112 est effectuée au moyen d'un vérin 114 interposé entre le prolongement 82a et la tête 110. Ce déplacement vertical de la tête 110 est destiné à amener celle-ci alternativement dans une position de chargement dans laquelle la rainure 110b est placée dans le prolongement du trou 88 par lequel arrive le jonc J et une position d'implantation située au-dessus de la position de chargement.

Lorsque la tête 110 est située dans la position de chargement représentée sur la figure 4, une butée 116 solidarisée de l'extrémité du prolongement 82a le plus proche du mandrin par une vis 118 autorisant un réglage de la butée se trouve située dans le prolongement de la rainure 110b, de sorte que le jonc J est arrêté par la butée 116 lorsqu'il est introduit dans la rainure 110b.

Sur toute la longueur de la tête 110, y compris le prolongement 110a, la rainure 110b est normalement fermée par une porte 120 (figures 4 et 6). Cette porte 120 est montée sur la tête 110 de façon à pouvoir coulisser dans le plan horizontal perpendiculairement à la direction du jonc J sous l'action d'un piston 122. Un ressort 124 maintient normalement la porte dans sa position assurant la fermeture de la rainure 110b, la mise en oeuvre du piston 122 ayant pour fonction comme on le verra ultérieurement de dégager la rainure 110b afin de permettre la rotation du mandrin après l'implantation d'un jonc.

Comme l'illustre en particulier la figure 6, un étrier 126 solidaire soit du bâti 82, soit de la tête 110 permet de plaquer en permanence la porte 120 contre cette dernière au niveau de la rainure 110b.

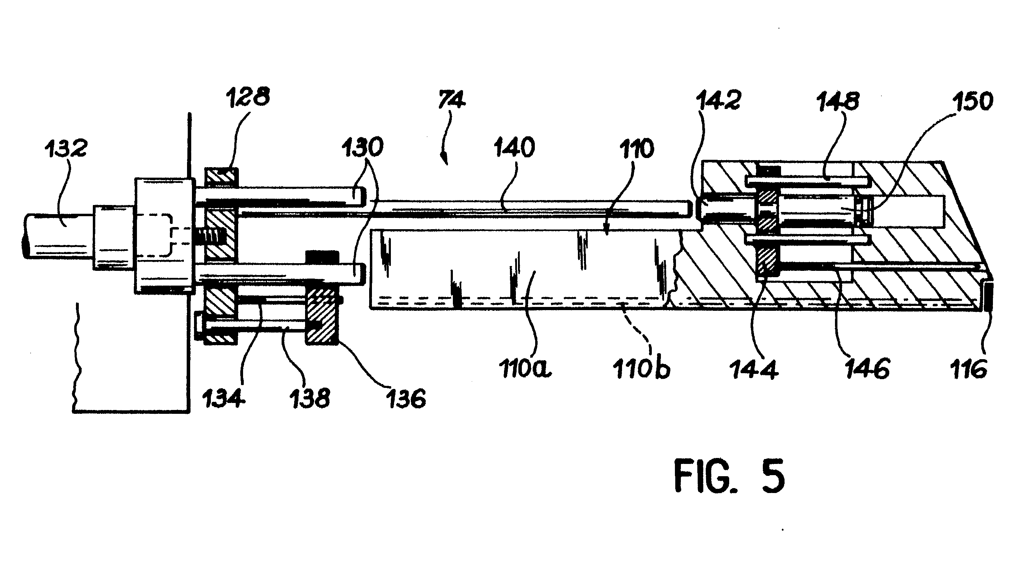

Comme l'illustrent plus précisément les figures 4 et 5, la platine 86 supporte également de façon coulissante, approximativement au-dessus des mors 92 et 94 et de l'ensemble de découpe du jonc qui lui est associé, une plaque support 128. Cette plaque se déplace parallèlement à la direction horizontale définie par le jonc sur des colonnes 130 fixées à la platine 86, sous l'action d'un vérin 132 également monté sur la platine.

La plaque 128 supporte tout d'abord une tige de poussée 134 qui se trouve située dans le prolongement de la rainure 110b formée dans la tête 110 lorsque celle-ci est en position haute d'implantation. Etant donné que, dans cette position, la butée 116 ne se trouve plus en face de l'extrémité de la rainure 110b la plus proche du mandrin, on comprend que la mise en oeuvre du vérin 132 introduit la tige de poussée 134 dans la rainure 110b, ce qui a pour effet d'implanter le jonc tronçonné qui se trouve dans la rainure sur une longueur légèrement inférieure à ce déplacement.

De préférence et comme l'illustre la figure 5, l'extrémité de la tige de poussée 134 traverse un guide 136 qui coulisse sur l'une des colonnes 130 et supporte lui-même une colonne parallèle 138 reçue de façon coulissante dans la plaque support 128.

Comme l'illustre en particulier la figure 5, la plaque 128 supporte également une tige de commande d'avant trou 140, disposée également parallèlement à la direction horizontale définie par le jonc J. Lorsque la tête 110 se trouve dans sa position haute d'implantation, l'extrémité de la tige de commande d'avant trou 140 est en appui sur une enclume 142 montée de façon coulissante dans la tête 110. L'enclume 142 est solidaire d'une plaque porte-poinçon 144 supportant un poinçon 146. Ce poinçon 146, également disposé selon la direction horizontale définie par le jonc J traverse l'extrémité de la tête 110, de telle sorte que son extrémité affleure normalement la face terminale de la tête d'implantation lorsqu'il est en position rétractée. L'ensemble constitué par l'enclume 142, la plaque 144 et le poinçon 146 se déplace à l'intérieur de la tête 110 parallèlement à la direction définie par le joint sur des colonnettes 148.

On comprend que la mise en oeuvre du vérin 132 permet, par l'action de la tige 140 sur l'enclume 142, d'enfoncer le poinçon 146 dans le mandrin, dans le même temps où un jonc préalablement tronçonné est enfoncé dans le mandrin par la tige 134. On réalise ainsi simultanément une perforation dans le mandrin et l'implantation d'un jonc tronçonné dans une perforation réalisée précédemment.

Etant donné que la tête d'implantation 110 peut se déplacer entre la position d'implantation et la position de chargement, il n'est pas possible de commander le rappel du poinçon 146 en agissant sur le vérin 132. Pour cette raison, on voit sur la figure 5 qu'un piston de rappel 150 est interposé entre la tête 110 et la plaque 144 à l'opposé de l'enclume 142.

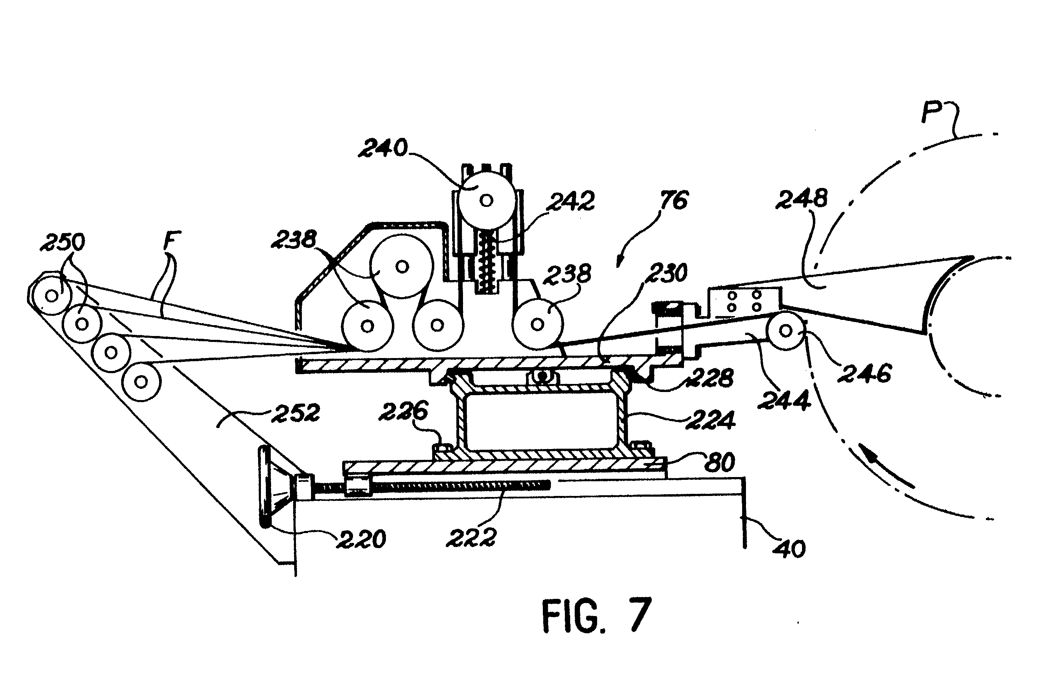

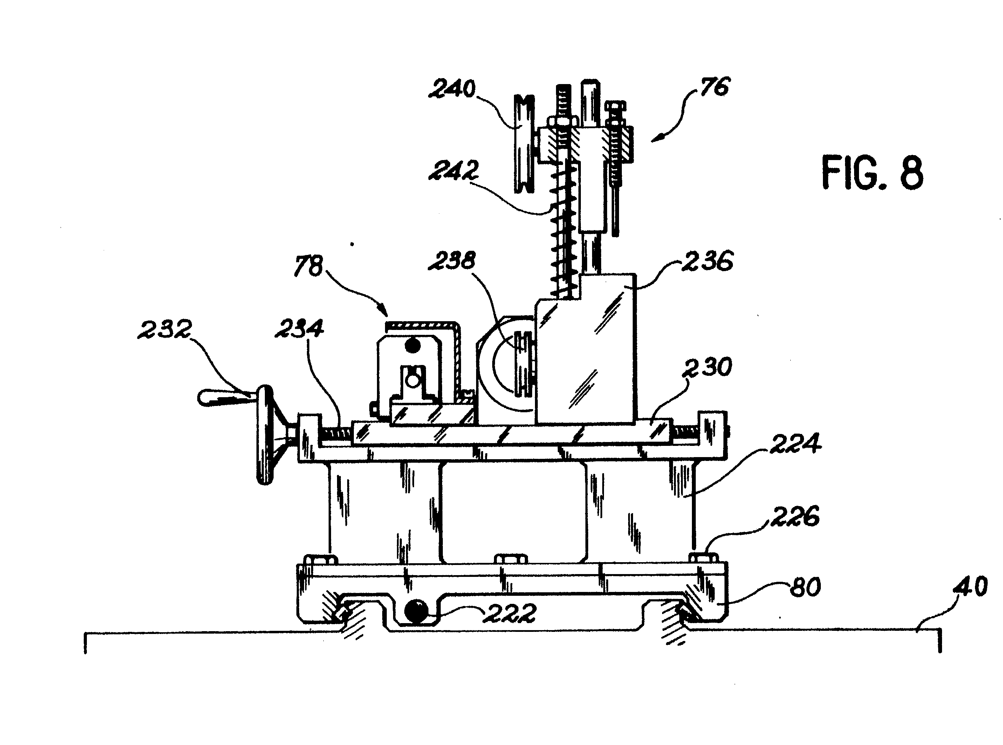

Afin de respecter l'ordre d'intervention des différents sous-ensembles d'usinage de la machine selon l'invention, on décrira maintenant le sous-ensemble de bobinage en se référant aux figures 7 et 8.

On reconnaît sur les figures 7 et 8 la table 80 mobile selon la direction Y par rapport au support 42. Le déplacement de la table 80 selon Y est commandé par un volant 220 agissant sur une vis à billes 222.

Un bâti 224 est fixé à la table 80 par des vis 226 et supporte par des glissières 228 orientées selon la direction X une platine 230. La position de la platine 230 sur les glissières 228 est réglée en agissant sur un volant 232 solidaire d'une vis à billes 234.

Comme l'illustre en particulier la figure 8, le sous-ensemble de bobinage 76 ainsi que le sous-ensemble de contrôle 78 sont montés côte à côte sur la platine 230. Ainsi, la connaissance du décalage selon l'axe X entre ces deux sous-ensembles permet de réaliser un contrôle dimensionnel précis.

Le sous-ensemble de bobinage 76 comprend une pièce support 236 sur laquelle sont montés les axes de poulies de guidage 238, ainsi qu'une poulie de tension 240 sollicitée élastiquement vers le haut par un ressort 242. Avec la platine 230 et le bâti 224, la pièce 236 constitue le support 72 (figure 3a) sur lequel peut être monté le sous-ensemble d'usinage 64.

Lors de son utilisation en sous-ensemble de bobinage, la pièce 230 supporte un porte-poulie 244 dont l'extrémité supporte la bobine 246, placée sensiblement au même niveau que l'axe de la machine. Le porte-poulie 244 supporte également une plaque plane 248 perpendiculaire à l'axe de la machine et dont l'extrémité est incurvée pour s'adapter sensiblement à la forme extérieure du mandrin. Cette plaque 248 pénètre dans les couloirs circonférentiels formés entre les joncs et en assure l'écartement quelle que soit leur longueur. Le bobinage s'effectue ainsi toujours dans des conditions satisfaisantes.

Sur la figure 7, on a représenté la position occupée par la plaque 248 lorsque la pièce P tourne dans le sens des aiguilles d'une montre. Dans le cas d'une rotation inverse, un dispositif (non représenté) situé au niveau de la liaison entre le porte-poulie 244 et la pièce support 230 permet de faire tourner le porte-poulie 244 et la plaque 248 qu'il supporte de 180° autour d'un axe horizontal perpendiculaire à l'axe de la machine.

Les fils F en provenance de bobines portées par le support mobile 40 (voir figure 1) passent par des poulies de renvoi 250 portées par un bras 252 solidaire du support 40 et contournent les poulies 238 et 240 avant d'être bobinées dans les couloirs circonférentiels par la poulie 246.

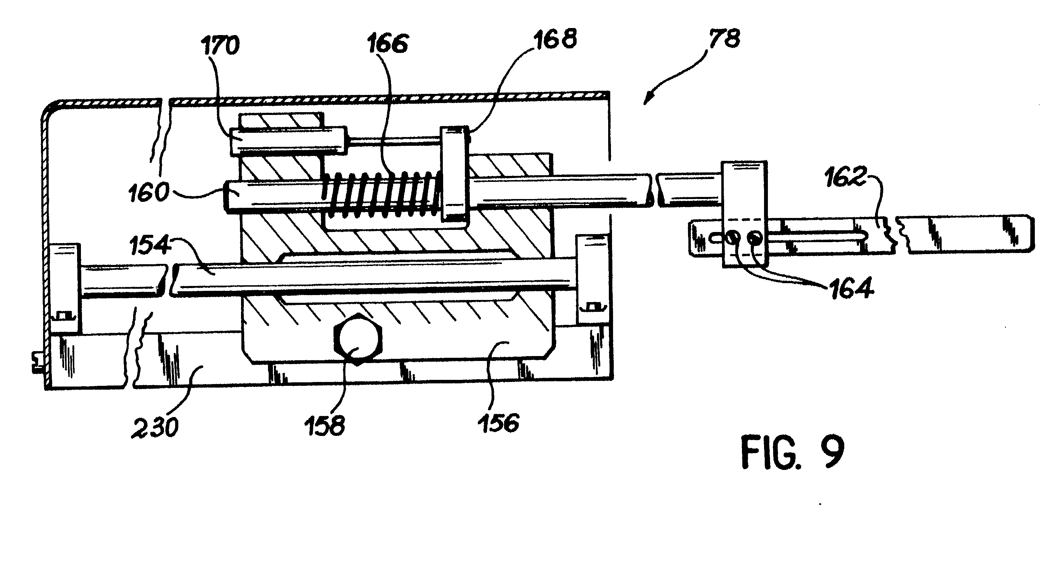

On décrira maintenant plus en détail en se référant à la figure 9 le sous-ensemble de contrôle 78 dont on a vu précédemment qu'il est toujours en place sur la platine 230 lorsque le support 72 de l'ensemble de bobinage 76 est monté sur cette table.

Ainsi, on voit sur la figure 9 que le sous-ensemble de contrôle 78 est monté sur la platine 230 du sous-ensemble de bobinage. Il comprend une colonne 154 fixée sur la platine 230 et orientée selon la direction Y. Une pièce 156 est montée sur la colonne 154 de façon à pouvoir se déplacer entre une position arrière de repos et une position avant de travail représentée sur la figure 7. Dans chacune de ces positions, la pièce 156 est immobilisée par un poussoir à billes 158. Parallèlement à la direction Y, la pièce 156 supporte un arbre coulissant 160 dont l'extrémité avant porte un doigt palpeur 162 apte à venir en appui sur le mandrin ou sur la pièce. La position du doigt 162 par rapport à l'arbre 160 selon la direction Y peut être réglée à volonté au moyen de vis 164. Il est à noter que le guidage de la colonne 160 dans la pièce 156 est réalisé de façon à empêcher la rotation du doigt 162.

Lorsqu'il est en appui sur le mandrin ou sur la pièce à contrôler, le doigt 162 est légèrement déplacé vers l'arrière par rapport à la position représentée sur la figure 7, de façon à comprimer un ressort de compression 166 agissant entre la pièce 156 et la colonne 160.

Une pièce de liaison 168 solidaire de l'arbre 160 assure la transmission des mouvements de translation du doigt 162 à un capteur de déplacement 170 supporté par la pièce 156. Un contrôle dimensionnel du mandrin et de la pièce peut ainsi être réalisé par contact à tout moment au cours de la fabrication.

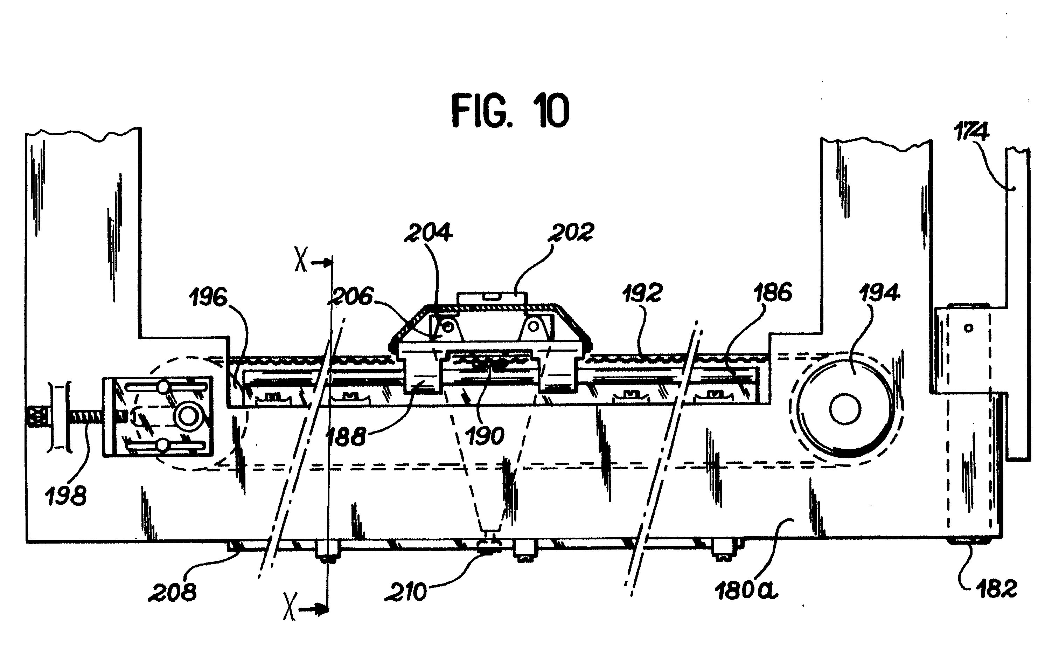

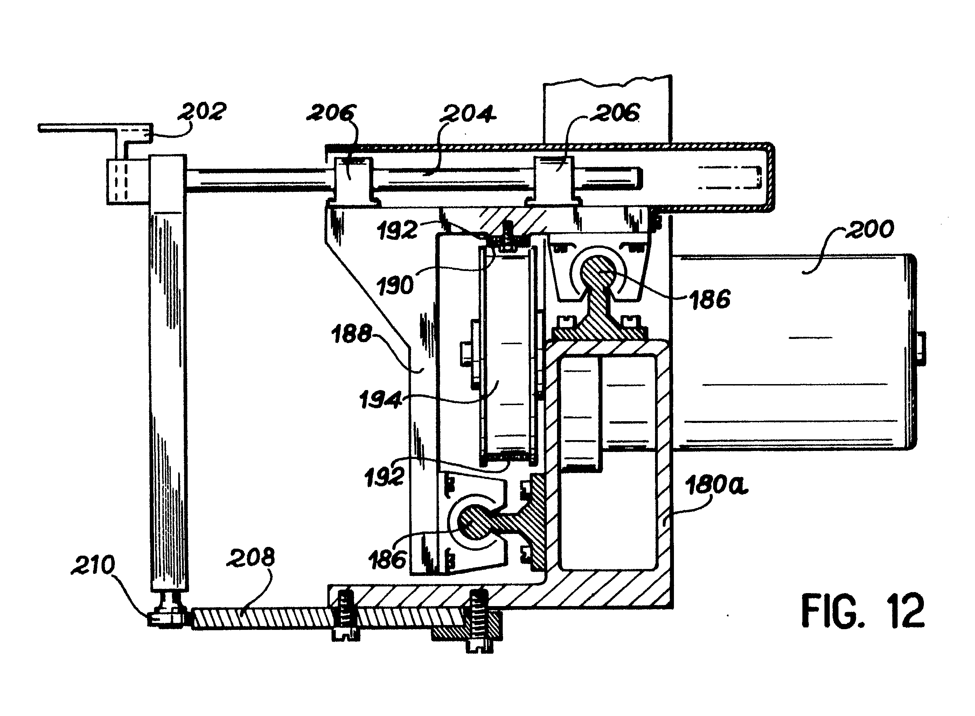

Tous les sous-ensembles conçus pour être montés sur le support mobile 40 de la machine représentée sur les figures 1 et 2 ayant été décrits, l'ensemble de tramage qui se trouve sur le côté droit de la machine en considérant la figure 2, c'est-à-dire de l'autre côté de la pièce par rapport au support 40, va maintenant être décrit en se référant aux figures 10 à 12.

Comme le montrent les figures 1 et 2, la poupée fixe 14 porte du côté opposé au support mobile 40 deux rails horizontaux superposés 172 s'étendant perpendiculairement l'axe de la machine, c'est-à-dire selon la direction Y. Sur ces rails 172 est monté un chariot 174 que l'on peut déplacer à volonté le long des rails en faisant tourner une vis à billes 176 à l'aide d'un volant 178.

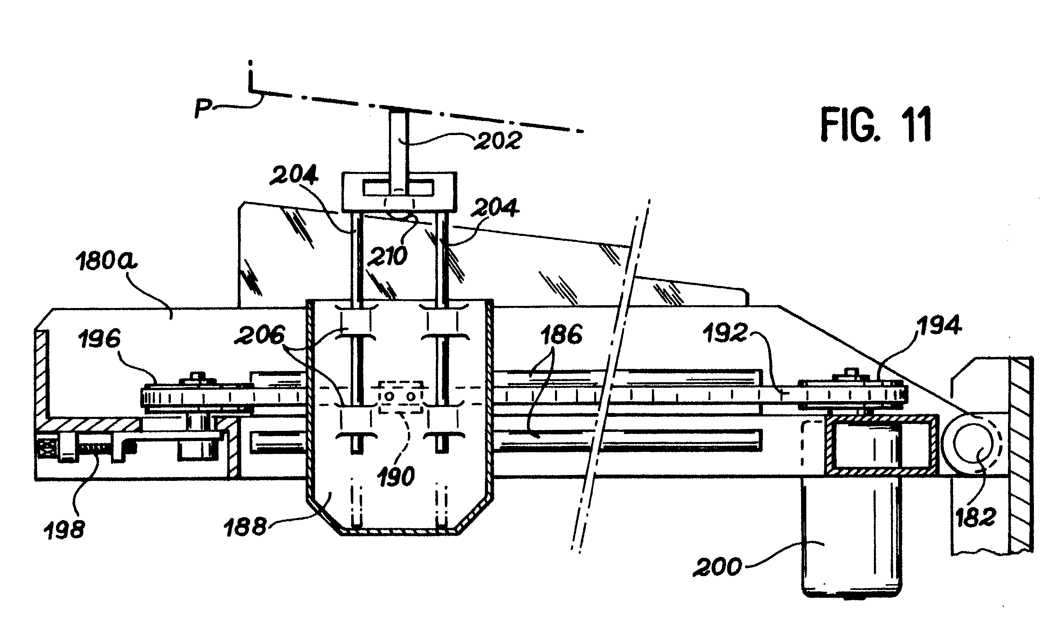

Comme on le voit en particulier sur la figure 1, un cadre rigide 180 constitué principalement de deux poutres horizontales parallèles et superposées est articulé par un axe vertical 182 (figures 10 et 11) sur le chariot 174.

Le cadre rigide 180 s'étend pratiquement sur toute la longueur de la machine à côté de la pièce P à usiner, jusqu'au-delà de la contre-pointe 22. Comme l'illustrent en particulier les figures 1 et 2, le cadre 180 est en appui à ce niveau sur une glissière 184 fixée en porte-à-faux sur la console 24. La fixation du cadre 180 sur la glissière 184 permet d'immobiliser le cadre 180 dans la position souhaitée.

On remarquera que la structure qui vient d'être décrite et qui supporte comme on va le voir le chariot de tramage permet de réaliser un déplacement de celui-ci selon une direction réglable à volonté. Cette direction sera parallèle à la génératrice de la pièce dans le cas d'une pièce cylindrique ou conique. Dans le cas d'une forme plus complexe, elle sera parallèle à la génératrice théorique reliant les extrémités de la pièce. Dans tous les cas, il est ainsi possible de limiter de façon appréciable le porte-à-faux du chariot de tramage.

Cette faculté d'orienter à volonté le cadre rigide 180 par rapport à l'axe de la machine permet également d'orienter la passette de tramage perpendiculairement à la direction de déplacement du chariot de tramage, ce qui permet au fil de trame de sortir de la passette dans des conditions sensiblement identiques quel que soit le sens de déplacement du chariot. On supprime ainsi les inconvénients des systèmes de tramage connus dans lesquels le chariot de tramage se déplace en permanence parallèlement à l'axe de la machine, quelle que soit la forme de la pièce à fabriquer.

Sur les figures 10 à 12, on voit que le système de tramage proprement dit est monté sur la poutre inférieure 180a du cadre rigide 180. A cet effet, la poutre 180a est munie de rails 186 sur sa face avant située du côté de la pièce et sur sa face supérieure. Sur ces rails 186 est monté un chariot trameur 188 solidarisé par une plaquette 190 d'une courroie crantée 192 montée sur deux poulies 194 et 196 dont les axes horizontaux sont supportés aux deux extrémités de la poutre 180a. L'axe de la poulie 196 est monté sur la poutre 180a de façon à pouvoir se déplacer longitudinalement lorsqu'on agit sur une vis 198. Cette configuration permet de régler la tension de la courroie.

Le déplacement du chariot de tramage 188 le long de la poutre 180a est commandé par un moteur 200 entraînant en rotation l'axe de la poulie 194.

Dans sa partie supérieure, le chariot de tramage 188 supporte la passette de tramage 202, de telle sorte que celle-ci peut se déplacer perpendiculairement à la direction de déplacement du chariot 188 le long de la poutre 180a. A cet effet, la passette 202 est solidaire de deux colonnettes horizontales 204 perpendiculaires à la poutre 180a et reçue de façon coulissante dans des paliers de guidage à billes 206 solidaires du chariot 188.

De même que pour le support mobile 40 sur lequel sont montés les différents sous-ensembles d'usinage, d'implantation, de bobinage et de contrôle, le suivi du profil de la pièce par la passette de tramage 202 est réalisé au moyen d'une came ou patronne de tramage 208 fixée de façon interchangeable sur la face inférieure de la poutre 180a et sur laquelle vient en appui un galet 210, d'axe vertical, solidaire de la passette 202.

Comme on l'a mentionné précédemment, le montage du chariot de tramage 188 sur le cadre rigide orientable 180 permet de déplacer la passette de tramage parallèlement à la génératrice de la pièce à réaliser dans le cas de pièces simples telles qu'un cylindre ou un cône, ou parallèlement à la génératrice fictive joignant les extrémités de la pièce à réaliser dans le cas de pièces de forme plus complexe. De ce fait, la forme de la patronne de tramage 208 est généralement différente de la forme de la patronne 48 commandant le déplacement du support mobile 40.

Si l'on se réfère à nouveau à la figure 1, on voit que la poutre supérieure 180b du cadre rigide 180 supporte de façon réglable deux systèmes dits accrochetrame 212 et, le cas échéant, un ou plusieurs systèmes dits abaisse-trame 214.

Les systèmes accroche-trame 212 sont placés au niveau des extrémités de la pièce à réaliser. Ils permettent de supprimer la rangée de picots inclinés qui est utilisée selon la technique antérieure pour accrocher le fil de trame à chacune des extrémités de la pièce. Cette solution est particulièrement avantageuse dans le cas de pièces de forte épaisseur et de grand diamètre, car la réalisation des bagues portant ces picots inclinés est alors très délicate et il existe un risque important pour que l'accrochage du fil de trame ne se fasse pas correctement lorsqu'on approche de l'extrémité des picots, compte tenu de la flexibilité inévitable de ceux-ci.

Les systèmes accroche-trame 212 sont identiques au système décrit dans la demande de brevet français n° 2 486 047 du 1et juillet 1980 déposée conjointement par le Commissariat à l'Energie Atomique et par la Société BROCHIER et Fils. On rappellera simplement qu'un tel système permet, après un maintien provisoire du fil de trame au moyen d'une fourchette accroche-trame lors du mouvement aller de la passette 202, puis au moyen d'une fourchette presse-trame lors du mouvement retour de la passette, de maintenir définitivement l'extrémité du fil en disposant un fil bobiné dans un couloir circonférentiel voisin.

Enfin, si l'on se reporte à nouveau à la figure 1, on voit que la poutre supérieure 180b du cadre rigide de tramage 180 peut supporter également un ou plusieurs systèmes abaisse-trame 214. De tels systèmes abaisse-trame sont utilisés lors de la fabrication de pièces présentant un profil concave plus ou moins complexe, afin de maintenir le fil de trame dans le fond des couloirs longitudinaux au fur et à mesure du tramage. Par exemple, dans le cas de la fabrication d'une pièce constituée de deux troncs de cône reliés par leur plus petit diamètre, un système abaisse-trame 214 sera placé au niveau de ce petit diamètre.

Un tel système abaisse-trame a fait l'objet d'une demande de brevet français n° 80 08178 déposée le 11 avril 1980 conjointement par le Commissariat à l'Energie Atomique et par la Société BROCHIER et Fils. Il ne sera donc pas décrit en détail dans la présente demande.

On rappellera simplement ici le principe de ce système qui consiste, immédiatement après le passage de la passette de tramage, à maintenir provisoirement le fil de trame au moyen d'un organe rétractable puis, après une certaine rotation de la pièce, à maintenir les fils de trame définitivement au niveau du système abaisse-trame à l'aide d'un fil que l'on bobine dans l'un des couloirs circonférentiels formés entre les joncs.

Par rapport aux systèmes décrits dans les demandes de brevet qui viennent d'être mentionnées, les systèmes accroche-trame 212 et abaisse-trame 214 utilisés dans la machine selon l'invention se distinguent essentiellement par le fait qu'au lieu d'agir au-dessus de la pièce, ils sont placés sur le côté de celle-ci, de même que l'ensemble du système de tramage, ce qui facilite l'accès à ce système dans le cas d'une machine destinée à la fabrication de pièces de grande dimension et permet comme on l'a vu de dégager la partie supérieure de la machine, afin que l'on puisse aisément mettre en place le mandrin avant son usinage et retirer la pièce terminée.

Bien entendu, afin de simplifier son fonctionnement, la machine selon l'invention peut être munie de différents automatismes.

Ainsi, en particulier, la rotation de la broche et, par conséquent, de la pièce par un moteur asservi autorise deux modes de fonctionnement.

Ainsi, un premier asservissement de vitesse peut être utilisé dans le cas du bobinage et de l'usinage de la mousse. Dans ce cas, il est possible de faire varier la vitesse depuis l'arrêt jusqu'à une vitesse de 60 tours/minute dans un sens ou dans l'autre.

Le moteur commandant la rotation de la broche peut aussi être asservi en position lors du tramage, de l'implantation ou du contrôle géométrique. On peut ainsi programmer les rotations successives de la broche selon un angle de rotation donné, ajustable à l'avance.

De même, on a vu que le déplacement du support mobile peut être obtenu soit par la commande de la broche, soit à l'aide d'un moteur 60 indépendant. La commande de déplacement du support mobile par la broche correspond aux opérations d'usinage du mandrin, d'implantation des joncs et de bobinage. La position selon X peut être connue en permanence grâce au codeur optique 62 associé au moteur 60, qui est alors hors circuit.

Par ailleurs, le déplacement du support mobile commandé par le moteur 60 est utilisé pour les déplacements rapides du chariot, qui peut également être positionné grâce au codeur optique 62. Un asservissement en vitesse du moteur 60 permet d'obtenir le positionnement souhaité pour le chariot par décélération et freinage au niveau de la cote programmée. Un détecteur photo-électrique peut également assurer un recalage automatique au zéro du codeur 62 à chaque fois que le chariot passe devant lui.

Un codeur optique peut également être associé au moteur commandant le déplacement du chariot de tramage afin de connaître la position de ce dernier le long de la poutre 180a. Un asservissement en vitesse du moteur permet de positionner le chariot de tramage par décélération et freinage au niveau de la cote programmée. Une cellule photo-électrique permet également de recaler le zéro du codeur.

Enfin, lors des étapes de bobinage et de tramage successifs, différents contrôles dimensionnels peuvent être effectués après la réalisation d'un certain nombre de couches. Il est ainsi possible de contrôler en cours de fabrication et à la fin de celle-ci à la fois les dimensions de la pièce et son coefficient de remplissage puisque le contrôle est réalisé à intervalles réguliers.

**Revendications**

1. Machine pour la fabrication de pièces creuses de révolution formées de fils s'étendant selon trois directions dites radiale, axile et circonférentielle, cette machine comprenant un châssis (10), une poupée fixe (14) montée à une extrémité du châssis, une broche (16) supportée de façon tournante par la poupée fixe, des moyens (18) pour commander la rotation de ladite broche, une contre-pointe (22) montée à l'autre extrémité du châssis, en face de la broche et définissant avec celle-ci un axe commun sensiblement horizontal, des moyens (28, 30) pour déplacer la contre-pointe selon ledit axe, un support mobile (40), apte à recevoir plusieurs sous-ensembles de travail interchangeables comprenant un sous-ensemble (74) d'implantation de joncs et un sous-ensemble de bobinage (76), monté d'un côté du châssis par rapport audit axe, des premiers moyens (18, 56, 58, 52) pour déplacer ce support parallèlement audit axe à une vitesse proportionnelle à la vitesse de rotation de ladite broche, des deuxièmes moyens (60, 52) pour commander un déplacement rapide du support parallèlement audit axe, des moyens pour déplacer le support perpendiculairement audit axe afin de suivre une première patronne (48) présentant le profil de la pièce à fabriquer, un ensemble de tramage monté de l'autre côté du châssis par rapport audit axe comportant un guide-chariot (180a) supportant de façon mobile un chariot de tramage (188) et des moyens (192, 194) pour déplacer selon un mouvement de va-et-vient le chariot le long du guide-chariot, le chariot de tramage supportant une passette de tramage (202) par l'intermédiaire de moyens (204, 206) pour déplacer cette dernière perpendiculairement par rapport audit guide-chariot afin de suivre une deuxième partonne (208), le guide-chariot (180a) supportant le chariot de tramage (188) étant monté sur le châssis (10) par l'intermédiaire de moyens d'orientation réglables (174, 184), cette machine étant caractérisée par le fait qu'elle comprend des moyens (28, 30) pour déplacer la contre-pointe selon ledit axe, que le support mobile est apte à recevoir plusieurs sous-ensembles de travail interchangeables comprenant un sous-ensemble (74) d'implantation de joncs et un sous-ensemble de bobinage (76), monté d'un côté du châssis par rapport audit axe, qu'elle comprend des deuxièmes moyens (60, 52) pour commander un déplacement rapide du support parallèlement audit axe, que l'ensemble de tramage est monté de l'autre côté du châssis par rapport audit axe et que la passette de tramage est montée sur le chariot de tramage par l'intermédiaire de moyens (204, 206) pour déplacer cette dernière perpendiculairement par rapport au guide chariot.

2. Machine selon la revendication 1, caractérisée en ce que l'extrémité dudit guide-chariot (180a) adjacente à la poupée fixe (14) est articulée sur un chariot (174) apte à être déplacé perpendiculairement audit axe par des moyens de réglage appropriés (178), l'extrémité opposée du guide-chariot de tramage étant montée sur une glissière (184) fixée au châssis.

3. Machine selon l'une quelconque des revendications 1 et 2, caractérisée en ce que le sous-ensemble de bobinage (76) comprend une partie interchangeable (81) apte à être remplacée par un sous-ensemble (64) d'usinage du mandrin.

4. Machine selon l'une quelconque des revendications 1 à 3, caractérisée en ce que les sous-ensembles de travail comprennent de plus un sous-ensemble de contrôle dimensionnel (78) associé au sous-ensemble de bobinage (76).

5. Machine selon l'une quelconque des revendications 1 à 4, caractérisée en ce que le sous-ensemble de bobinage (76) comprend une plaque plane (248) orientée perpendiculairement audit axe et pénétrant dans un couloir circonférentiel de bobinage formé entre les joncs, en avant du fil de bobinage compte tenu du sens de rotation de la pièce (P).

6. Machine selon la revendication 5, caractérisée en ce que des moyens sont prévus pour inverser l'orientation de ladite plaque (248) selon le sens de rotation de la pièce (P).

7. Machine selon l'une quelconque des revendications 1 à 6, caractérisée en ce qu'une poutre (180b) solidaire du guide-chariot de tramage (180a) et parallèle à celui-ci supporte deux dispositifs accroch-trame (212) placés au niveau des extrémités de ladite pièce (P) pour maintenir les extrémités des fils de trame déposés par la passette de tramage (202), au fur et à mesure de leur dépôt.

**Claims**

1. Machine for the production of hollow bodies of revolution formed from threads extending in three directions, called the radial, axial and circumferential directions, said machine comprising a chassis (10), a headstock (14) mounted at one end of the chassis, a spindle (16) supported in rotary manner by the headstock, means (18) for controlling the rotation of the spindle, a tailstock (22) mounted at the other end of the chassis in front of the spindle and defining therewith a substantially horizontal common axis, a mobile support (40), first means (18, 56, 58, 52) for displacing said support parallel to said axis at a speed proportional to the rotation speed of said spindle, means for displacing the support perpendicular to said axis, in order to follow a first pattern (48) having the profile of the part to be made, a weaving assembly having a carriage guide (180a) movably supporting a weaving carriage (188) and means (192, 194) for the reciprocating displacement of the carriage along the carriage guide, the weaving carriage (188) supporting a weaving means (202) perpendicular with respect to said carriage guide in order to follow a second pattern (208), the carriage guide (180a) being mounted on the chassis (10) via regulatable orientation means (174, 184) said machine being characterized in that it comprises means (28, 30) for displacing the tailstock along said axis, the mobile support is able to successively receive several interchangeable working subassemblies (74) incorporating a retaining ring implantation subassembly and a winding subassembly (76) located on one side of the chassis with respect to said axis, that it comprises second means (60, 52) for controlling a rapid displacement of the support parallel to said axis, that the weaving assembly is mounted on the other side of the chassis with respect to said axis and that the weaving means is mounted on the weaving carriage via means (204, 206) for displacing said pattern perpendicular to the carriage guide.

2. Machine according to claim 1, characterized in that the end of the carriage guide (180a) adjacent to the headstock (14) is articulated on a carriage (174), which can be moved perpendicularly to said axis by appropriate regulating means (178), the opposite end of the weaving guide carriage being mounted on a slide (184) fixed to the chassis.

3. Machine according to claims 1 or 2, characterized in that the winding subassembly (76) comprises an interchangeable part (81) which can be replaced by a mandrel machining subassembly (64).

4. Machine according to one of the claims 1 to 3, characterized in that the working subassemblies also comprise a dimensional control subassembly (78) associated with the winding subassembly (76).

5. Machine according to one of the claims 1 to 4, characterized in that the winding subassembly (76) comprises a planar plate (248) oriented perpendicular to said axis and which penetrates a circumferential winding passage formed between the retaining rings, in front of the winding thread, bearing in mind the rotation direction of the body (P).

6. Machine according to claim 5, characterized in that means are provided for reversing the orientation of said plate (248) as a function of the rotation direction of the body (P).

7. Machine according to one of the claims 1 to 6, characterized in that a beam (180b) integral with the weaving guide carriage (180a) parallel thereto supports two weft attachment devices (212) positioned level with the ends of said body (P) for holding in place the ends of the weft threads deposited by the weaving means (202) during the deposition thereof.

**Patentansprüche**

1. Maschine zur Herstellung von Rotationshohlkörpern, gebildet aus Fasern oder Fäden, die sich in drei Richtungen, radial, axial und in Umfangserstreckung genannt, erstrecken, wobei diese Maschine ein Chassis (10), eine feste Docke (14), die an einem Ende des Chassis angeordnet ist, eine Spindel (16), die in drehender Weise durch die feste Docke getragen wird, Einrichtungen (18), um die Drehung der Spindel zu steuern, eine Gegenspitze bzw. einen Reitstock (22), der am gegenüber dem Dorn anderen Ende des Chassis angeordnet ist, und mit diesem eine gemeinsame im wesentlichen horizontale Achse definiert, einen beweglichen Support (40), erste Einrichtungen (18, 56, 58, 52), um diesen Support parallel zur Achse mit einer Geschwindigkeit zu bewegen, die proportional zur Drehgeschwindigkeit der Spindel ist, Einrichtungen, um den Support senkrecht zur genannten Achse zu verschieben, um einer ersten Patrone bzw. einem ersten Führungsstück (48) zu folgen, das das Profil des herzustellenden Teiles aufweist, eine Schußeintraganordnung aufweist, die einen Führungsschlitten (180a) aufweist, der auf bewegliche Weise einen Schußeintragschlitten (188) und Einrichtungen (192, 194) trägt, um den Schlitten gemäß einer Hin- und Herbewegung entlang des Führungsschlittens zu bewegen, wobei der Schußeintragschlitten eine Schlußeintrageinziehnadel bzw. einen Schußeintrageinziehhaken (202) senkrecht bezüglich des Führungsschlittens aufweist, um einem zweiten Führungsstück bzw. einer zweiten Patrone (208) zu folgen, wobei der Führungsschlitten (180a), der den Schlußeintragschlitten (188) trägt, auf dem Chassis (10) mittels regelbarer Ausrichteinrichtungen (174, 184) angeordnet ist, wobei diese Maschine gekennzeichnet ist dadurch, daß sie Einrichtungen (28, 30) zum Verschieben des Reitstocks entlang der genannten Achse aufweist, daß der bewegliche Support geeignet ist mehrere Unteranordnungen von zwischenaustauschbarer Arbeit aufzuweisen, die eine Unteranordnung (74) der Montage bzw. Einbringung von Stangen (joncs) und eine Unteranordnung des Spulens (76) aufweisen, die auf einer Seite des Chassis bezüglich der genannten Achse angeordnet ist, daß sie zweite Einrichtungen (60, 52) aufweist, um eine schnelle Bewegung des Supports parallel zur genannten Achse zu steuern, und daß der Schußeintraghaken auf dem Schußeintragschlitten mittels Einrichtungen (204, 206) zur Bewegung des letzteren senkrecht bezüglich des Führungsschlittens angeordnet ist.

2. Maschine nach Anspruch 1, dadurch gekennzeichnet, daß das Ende des Führungsschlittens (180a) in der Nähe der festen Docke (14) auf einem Schlitten (174) angelegt ist, der geeignet ist senkrecht zur genannten Achse mittels geeigneten Einstelleinrichtungen (178) bewegt zu werden, wobei das dem Führungsschlitten des Schlußeintrags gegenüberliegende Ende auf einer Gleitschiene (184) angeordnet ist, die an dem Chassis befestigt ist.

3. Maschine nach Anspruch 1 oder 2, dadurch gekennzeichnet, daß die Spulenunteranordnung (76) einen austauschbaren Bereich (81) aufweist, der geeignet ist, durch eine Unteranordnung (64) der maschinellen Bearbeitung des Dorns ersetzt zu werden.

4. Maschine nach einem der Ansprüche 1 bis 3, dadurch gekennzeichnet, daß die Arbeitsunteranordnungen weiterhin eine Unteranordnung der Dimensionskontrolle (78) aufweisen, die der Spulenunteranordnung (76) zugeordnet ist.

5. Maschine nach einem der Ansprüche 1 bis 4, dadurch gekennzeichnet, daß die Spulenunteranordnung (76) eine ebene Platte (248) aufweist, die senkrecht zur Achse ausgerichtet ist und in einen Spulenumfangsgang eintritt, der zwischen den Stangen oberhalb des Spulenfadens unter Berücksichtigung der Drehrichtung des Teils (P) gebildet ist.

6. Maschine nach Anspruch 5, dadurch gekennzeichnet, daß Einrichtungen vorgesehen sind, um die Ausrichtung der genannten Platte (248) gemäß der Drehrichtung des Teils (P) umzukehren.

7. Maschine nach einem der Ansprüche 1 bis 6, dadurch gekennzeichnet, daß ein mit dem Schußeintragsführungsschlitten (180a) und parallel zu diesem verbundener Balken (180b) zwei Schußfadenhakenvorrichtungen (212) trägt, die auf der Höhe der Enden des genannten Teils (P) angeordnet sind, um die Enden der Schußfäden, die durch die Schußeintrageinziehnadel (202) abgelegt wurden entsprechend ihrer Ablage zu halten.

FIG. 1

EP 0 216 695 B1

FIG. 2

EP 0 216 695 B1

**FIG. 3a**

**FIG. 3b**

**FIG. 3c**

**FIG. 3d**

FIG. 4

FIG. 5

EP 0 216 695 B1

FIG. 6

EP 0 216 695 B1

FIG. 7

FIG. 8

240  76

242

78  238  236

232  234  230

224

226

80  40

222

EP 0 216 695 B1

FIG. 9

170    166    168    78

160

154

230    158    156

162

164

EP 0 216 695 B1

FIG. 10

FIG. 11

EP 0 216 695 B1

FIG. 12

EP 0 216 695 B1